# FASCICULE DE BREVET EUROPEEN

(11) **EP 1 874 597 B1**
(45) Date de publication et mention de la délivrance du brevet: **27.06.2012**
(21) Numéro de dépôt: 06724460.8
(22) Date de dépôt: 20.04.2006
(51) Int. Cl.: B60S 1/38

(54) **SUPPORT DE MONTAGE D'UN BALAI D'ESSUIE-GLACE A L'EXTREMITE D'UN BRAS D'ENTRAINEMENT REALISE EN DEUX PARTIES**
HALTER ZUR BEFESTIGUNG EINES WISCHERBLATTS AM ENDE EINES ANTRIEBSARMS, DER AUS ZWEI TEILEN BESTEHT
BRACKET FOR MOUNTING A WIPER BLADE AT THE END OF A DRIVING ARM MADE OF TWO PARTS

(30) Priorité: 29.04.2005 FR 0504407
(43) Date de publication de la demande: 09.01.2008
(73) Titulaire: VALEO SYSTEMES D'ESSUYAGE, 78321 La Verrière (FR)
(72) Inventeur: THIENARD, Jean-Claude, F-76200 Dieppe (FR)
(74) Mandataire: Rosolen-Delarue, Katell
(86) Numéro de dépôt international: PCT/EP2006/003628
(87) Numéro de publication internationale: WO 2006/117081

(56) Documents cités:
- DE-A1- 10 036 115
- DE-A1- 10 036 122
- FR-A- 2 854 852
- FR-A- 2 868 376
- US-B1- 6 581 237
- PATENT ABSTRACTS OF JAPAN vol. 2003, no. 09, 3 septembre 2003 (2003-09-03) -& JP 2003 146190 A (ASMO CO LTD), 21 mai 2003 (2003-05-21) cité dans la demande

## Description

L'invention propose un support de montage d'un balai d'essuie-glace sur lequel est monté un connecteur de montage et d'articulation du balai par rapport à un bras d'entraînement.

L'invention propose plus particulièrement un support de montage d'un balai d'essuie-glace d'orientation principale longitudinale sur un bras d'entraînement du balai, qui est fixé sur le balai, et sur lequel le bras d'entraînement est monté par l'intermédiaire d'un connecteur de montage et d'articulation, qui comporte deux parties latérales d'orientation principale longitudinale agencées transversalement de part et d'autre du balai, chaque partie latérale comportant une embase supérieure qui est en appui sur une face supérieure du balai, une patte latérale inférieure s'étendant verticalement vers le bas depuis l'embase supérieure associée et portant des moyens de blocage du support en position sur le balai, l'extrémité longitudinale avant du support de montage portant des moyens avant de solidarisation des parties latérales l'une avec l'autre, et l'extrémité longitudinale arrière du support de montage portant des moyens arrière de solidarisation des parties latérales l'une avec l'autre, de manière que le support de montage soit fixé sur l'élément de structure du balai lorsque les deux parties latérales sont solidarisées l'une avec l'autre, et qui comporte des moyens de montage du connecteur sur le support de montage.

Les dimensions d'un balai d'essuie-glace et les moyens de montage du balai sur le bras d'entraînement du balai sont généralement spécifiques à chaque véhicule automobile, et sont principalement déterminés par le constructeur du véhicule.

Ainsi, un équipementier qui produit des composants de mécanismes d'essuie-glace doit concevoir un nombre important de composants pour équiper les divers modèles produits par chaque constructeur automobile.

De plus, le balai est une pièce d'usure du véhicule qui doit être changée régulièrement, pour conserver une bonne qualité de l'essuyage du panneau vitré du véhicule.

L'augmentation du nombre d'éléments différents produits par les équipementiers implique que l'inventaire du revendeur d'éléments de remplacement est lui aussi augmenté, ce qui peut poser des problèmes notamment en ce qui concerne la gestion des stock. De plus, le propriétaire du véhicule, qui désire remplacer le balai usagé, se trouve confronté au problème de choisir le ou les composants appropriés parmi un nombre important d'éléments à sa disposition.

Selon une conception visant à réaliser des essuie-glace de faible hauteur, la structure articulée du balai d'essuie-glace qui porte la raclette d'essuie-glace est supprimée et ce sont par exemple des vertèbres, ou des éléments de renfort structurels analogues aux vertèbres, qui sont associées à la raclette d'essuie-glace souple pour constituer le balai d'essuie-glace proprement dit, aussi appelé "flat-blade".

Ce balai de faible hauteur est entraîné dans un mouvement de balayage alterné par un mécanisme d'entraînement comportant un bras d'entraînement. Etant donnée la faible hauteur des éléments structurels du balai, le balai porte un support de montage qui est une pièce rapportée montée sur la structure du balai, et sur lequel est monté un connecteur de montage et d'articulation du balai par rapport à l'extrémité du bras d'entraînement.

Le document JP-A-2003146190 décrit un support de montage qui est réalisé en deux parties réparties latéralement de part et d'autre du balai et qui sont montées sur les éléments structurels du balai pour réaliser la fixation du support de montage avec le balai.

Cependant, selon ce document, le connecteur de montage est monté sur le support simultanément au montage du support sur le balai, et les moyens qui sont utilisés pour le montage du connecteur sur le support de montage sont les moyens utilisés pour la solidarisation des deux parties du support l'une avec l'autre.

En outre, le connecteur est généralement adapté pour le montage du balai sur un type particulier de bras d'entraînement, et par conséquent et il ne permet pas de monter le balai sur un bras d'entraînement d'un autre type.

Ainsi, après que le support de montage et le connecteur aient été montés sur le balai, il n'est pas possible de monter sur le support de montage un connecteur différent de celui qui est monté qui est adapté au montage du balai acheté sur un bras d'entraînement d'un autre type. US-A-6581237 montre le préambule de la revendication 1.

L'invention a pour but de proposer un support de montage du balai d'essuie-glace sur lequel il est possible de monter tout type de connecteur, après que le support ait été monté sur le balai.

Dans ce but, l'invention propose un support de montage du type décrit précédemment, caractérisé en ce que les moyens avant de solidarisation et les moyens arrière de solidarisation sont distincts des moyens de montage du connecteur sur le support de montage, de manière que les deux parties latérales soient solidarisées l'une avec l'autre indépendamment du montage du connecteur sur le support de montage.

Selon d'autres caractéristiques de l'invention :
- le connecteur est monté au moins en partie sur le support de montage au niveau d'une face horizontale supérieure d'appui du support de montage qui est réalisée en partie dans chaque partie latérale et qui est agencée longitudinalement entre les moyens avant de solidarisation et les moyens arrière de solidarisation ;
- la face supérieure d'appui est située verticalement à une hauteur inférieure à la hauteur des moyens avant de solidarisation et des moyens arrière de solidarisation ;
- les moyens de montage du connecteur sont portés au moins en partie par la face supérieure d'appui ;
- le connecteur est monté sur la face supérieure d'appui du support de montage par emboîtement élastique de formes complémentaires ;
- le connecteur est monté sur la face supérieure d'appui du support de montage par sertissage sur la face supérieure d'appui ;
- les moyens de montage du connecteur sont portés au moins en partie par les moyens avant de solidarisation et/ou les moyens arrière de solidarisation ;
- les moyens de montage du connecteur comportent un organe de montage qui est porté par les moyens arrière de solidarisation ;
- les moyens avant de solidarisation comportent une paroi globalement transversale verticale dans laquelle est réalisée une rainure transversale formant mortaise qui est apte à recevoir une partie complémentaire du connecteur formant tenon ;
- les moyens avant de solidarisation et/ou les moyens arrière de solidarisation comportent un bossage agencé à l'extrémité longitudinale avant ou arrière, respectivement, de l'embase supérieure de chaque partie latérale, et comportent une tige transversale dont chaque extrémité transversale de la tige est sertie dans le bossage associé de chacune des deux parties latérales ;
- la dimension transversale de chaque bossage est globalement identique à la dimension transversale de l'embase de la partie latérale associée ;
- la dimension transversale de chaque bossage est inférieure à la dimension transversale de l'embase de la partie latérale associée.

D'autres caractéristiques et avantages de l'invention apparaîtront à la lecture de la description détaillée qui suit pour la compréhension de laquelle on se reportera aux figures annexées parmi lesquelles :
- la figure 1 est une représentation schématique en perspective d'un support de montage conforme à l'invention qui est fixé sur un balai d'essuie-glace de type "flat-blade" ;
- la figure 2 est une vue partielle de l'extrémité avant d'un support de montage selon une variante de réalisation du support de montage représenté à la figure 1 ;
- la figure 3 est une section suivant un plan vertical transversal du support de montage représenté à la figure 1, sur lequel un connecteur est monté par emboîtement élastique ;
- la figure 4 est une section similaire à celle de la figure 4, dans laquelle le connecteur est monté sur le support de montage par sertissage ;
- la figure 5 est une vue similaire à celle de la figure 1, représentant une variante de réalisation du support de montage qui porte à son extrémité arrière un organe de montage du connecteur.

Pour la description de l'invention, on adoptera à titre non limitatif les orientations verticale, longitudinale et transversale selon le repère V, L, T indiqué aux figures.

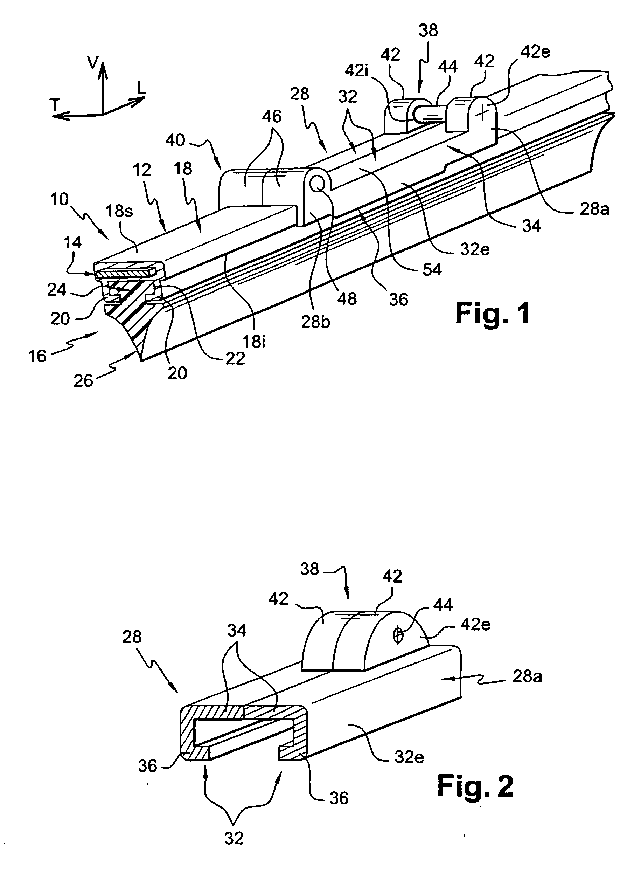

On adoptera aussi l'orientation d'avant en arrière comme étant la direction longitudinale et de droite à gauche en se reportant à la figure 1.

Dans la description qui va suivre, des éléments identiques, similaires ou analogues seront désignés par les mêmes chiffres de référence.

On a représenté à la figure 1 un balai d'essuie-glace 10 de type "flat-blade", qui comporte une monture de support 12 d'orientation principale longitudinale, qui porte les composants du balai 10, parmi lesquels une vertèbre interne 14 en forme de lame horizontale longitudinale, et une raclette inférieure d'essuie-glace 16.

La monture de support 12 comporte un corps central 18 tubulaire d'axe principal longitudinal, et des moyens inférieurs de montage de la raclette d'essuie-glace, qui consistent ici en deux crochets inférieurs longitudinaux 20 en vis-à-vis, et qui délimitent un logement tubulaire 22 ouvert vers le bas, dans lequel un dos supérieur 24 complémentaire de la raclette 16 est monté.

La raclette 16 est un élément réalisé en un matériau souple, par exemple en caoutchouc, et elle comporte une lame inférieure 26 qui vient en contact avec le pare-brise du véhicule (non représenté), et le dos supérieur 24 par l'intermédiaire duquel la raclette est fixée à la monture de support 12.

La vertèbre 14 constitue l'élément structurel du balai 10, qui rigidifie la monture 12. La vertèbre 14 est réalisée en un matériau relativement rigide, par exemple en acier, et elle consiste en une lame horizontale longitudinale qui est agencée à l'intérieur du corps tubulaire 18 de la monture de support 12.

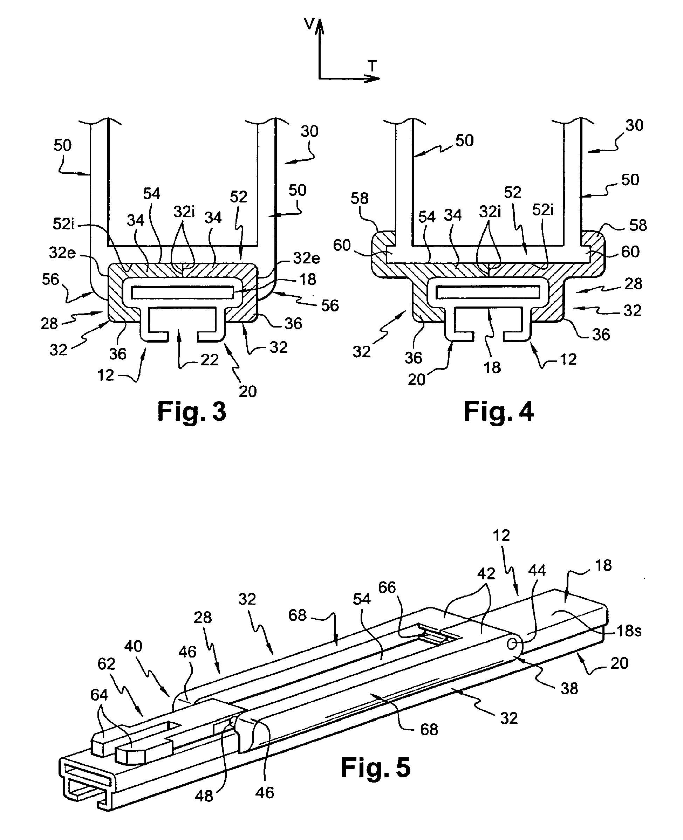

Le balai d'essuie-glace 10 porte un support de montage 28 du balai 10 à l'extrémité libre d'un bras d'entraînement du balai 10 en mouvement de balayage alterné (non représenté). L'extrémité du bras d'entraînement est montée sur le support de montage 28 par l'intermédiaire d'un connecteur de montage et d'articulation 30 (figures 3 et 4), qui permet notamment au balai 10 de pivoter autour d'un axe transversal par rapport à l'extrémité du bras d'entraînement.

Le support de montage 28 est agencé longitudinalement globalement au milieu de la monture 12, en chevauchant le corps 18 de la monture 12.

Le support de montage 28 est réalisé en deux parties latérales 32 qui sont symétriques par rapport à un plan longitudinal vertical médian du balai et qui sont montées sur la monture selon un mouvement transversal.

Chaque partie latérale 32 du support de montage 28 comporte une embase supérieure 34 qui est en appui contre la face supérieure horizontale 18s du corps tubulaire 18 de la monture 12, et une patte latérale inférieure 36 qui s'étend vers le bas depuis l'embase supérieure 34 associée, de manière que les pattes latérales 36 des deux parties latérales 32 sont réparties transversalement de part et d'autre du corps 18 de la monture 12, de manière à réaliser le positionnement transversal du support de montage 28 par rapport à la monture 12.

L'extrémité inférieure libre 36i de chaque patte latérale 36 est recourbée vers l'intérieur du support de montage 28, en constituant un crochet qui s'appuie contre la face inférieure 18i du corps 18. L'extrémité inférieure 36i de chaque patte latérale 36 permet ainsi de réaliser le blocage vertical du support de montage 28 en position montée autour du corps 18.

Enfin, chaque patte latérale 36 comporte des ergots internes (non représentés) qui traversent transversalement le corps 18 de la monture 12 pour coopérer avec des encoches (non représentées) réalisées dans la vertèbre 14, réalisant ainsi le blocage longitudinal du support de montage en position montée sur la monture 12. De tels ergots internes et encoches sont par exemple décrits dans le document JP-A-2003146190.

Le support de montage 28 comporte aussi des moyens pour la solidarisation des deux parties latérales 32 l'une avec l'autre de manière que lorsque les deux parties latérales 32 sont solidarisées l'une avec l'autre, le support de montage 28 est fixé à la monture du balai 10.

Les moyens de solidarisation comportent des moyens avant de solidarisation 38, qui sont agencés à l'extrémité avant 28a du support de montage 28, et des moyens arrière de solidarisation 40, qui sont agencés à l'extrémité longitudinale arrière 28b du support de montage 28.

Enfin, comme on l'a représenté aux figures 3, 4 et 5, le support de montage 28 porte des moyens pour le montage du connecteur 30.

Conformément à l'invention, les moyens avant de solidarisation 38 et les moyens arrière de solidarisation 40 sont distincts des moyens de montage du connecteur 30 sur le support de montage 28, de manière à permettre la fixation du support de montage 28 sur le balai d'essuie-glace 10, indépendamment du montage du connecteur 30 sur le support de montage 28.

Par conséquent, il est possible de monter au préalable le support de montage 28 sur le balai d'essuie-glace 10, par exemple sur une chaîne de montage, puis de monter le connecteur 30 sur le support de montage 28, en fonction du type d'extrémité du bras d'entraînement, par exemple dans un magasin de vente de balais d'essuie-glace de remplacement.

Comme on peut le voir aux figures 1 et 2, les moyens avant de solidarisation 38 comportent un bossage avant 42 agencé à l'extrémité longitudinale avant de chacune des parties latérales 32 du support de montage 28. Les deux bossages avant 42 sont reliés entre eux par une tige transversale 44, ou rivet, dont chaque extrémité transversale de la tige 44 est sertie dans le bossage avant 42 associé, réalisant ainsi la solidarisation des extrémités avant des deux parties latérales 32 l'une avec l'autre.

De manière similaire, pour la solidarisation des extrémités longitudinales arrières des deux parties latérales 32 l'une avec l'autre, les moyens arrière de solidarisation 40 comportent un bossage arrière 46 qui est agencé à l'extrémité longitudinale arrière de chaque partie latérale 32, et les deux bossages arrière 46 sont reliés entre eux par une tige transversale 48 qui est sertie à chacune de ses extrémités transversale dans un bossage arrière 46.

Comme on l'a représenté à la figure 1, ici, chaque bossage 46 des moyens arrière de solidarisation 40 est conformé de manière que sa dimension transversale, ou largeur, est globalement égale à la largeur de la partie latérale 32 associée.

Les deux faces longitudinales verticales d'extrémité transversale du bossage 46 affleurent donc transversalement avec les deux faces longitudinales verticales d'extrémité transversale de la partie latérale 32. Ainsi, lorsque les deux parties latérales 32 du support de montage 28 sont solidarisées l'une avec l'autre, les deux faces longitudinales verticales en vis-à-vis des deux bossages 46 sont en appui l'une contre l'autre.

Par contre, comme on peut le voir aux figures 1 et 2, chaque bossage 42 des moyens avant 38 de solidarisation est conformé de manière que sa largeur est inférieure à la largeur de la partie latérale 32 associée. Ainsi, au moins une des deux faces longitudinales verticales d'extrémité transversale du bossage 42 est en retrait transversalement par rapport à la face longitudinale verticale d'extrémité transversale associée de la partie latérale 32.

Selon le mode de réalisation représenté à la figure 1, la face longitudinale verticale interne 42i du bossage 42 est en retrait transversalement par rapport à la face longitudinale verticale interne 32i de la partie latérale associée, et la face longitudinale verticale externe 42e du bossage 42 affleure transversalement avec la face longitudinale verticale externe 32e de la partie latérale 32 associée.

De plus, selon ce mode de réalisation, et puisque les faces longitudinales verticales internes en vis-à-vis 42i des deux bossages 42 sont distantes l'une de l'autre, un tronçon central de la tige transversale 44 est dégagé. Ce tronçon intermédiaire de la tige transversale peut alors être utilisé pour le montage d'un élément sur le support de montage 28.

Selon une variante de réalisation représentée à la figure 2, la face longitudinale verticale externe 42e du bossage 42 est en retrait transversalement par rapport à la face longitudinale verticale externe 32e de la partie latérale 32 associée, et la face longitudinale verticale interne 42i du bossage 42 affleure transversalement avec la face longitudinale verticale interne 32i de la partie latérale 32 associée.

Ainsi, la largeur totale des moyens avant de solidarisation 38 est limitée, réduisant ainsi l'encombrement global du support de montage 28.

De plus, il sera compris que cette description des moyens avant de solidarisation 38 et des moyens arrière de solidarisation 40 n'est pas limitative. Par conséquent, les bossages 42, 46 des moyens avant de solidarisation 38 et des moyens arrière de solidarisation 40, peuvent être réalisés selon l'un ou l'autre des différents modes de réalisation des bossages 42, 46 décrits ci-dessus.

Comme on l'a dit plus haut, le bras d'entraînement du balai 10 est monté sur le support de montage 28 par l'intermédiaire du connecteur 30.

Selon un mode de réalisation conventionnel, et comme on peut le voir aux figures 3 et 4, le connecteur 30 comporte notamment deux joues latérales 50 longitudinales verticales qui s'étendent verticalement vers le haut depuis un fond inférieur horizontal 52.

De plus, le support de montage 28 comporte une face horizontale d'appui 54, sur laquelle s'appuie une face horizontale inférieure 52i en vis-à-vis du fond 52 du connecteur.

Comme on peut le voir aux figures 1 et 2, cette face supérieure 54 du support de montage 28 est formée par les deux faces supérieures horizontales 34s des embases 34 des deux parties latérales 32. Ainsi, la face supérieure horizontale 32s de chaque partie latérale 32 reçoit en partie le connecteur 30

De plus, comme on peut le voir aux figures, la face supérieure horizontale d'appui 54 est située verticalement à une hauteur inférieure à la hauteur des bossages 42, 46 des moyens avant et arrière de solidarisation 38, 40.

Cela permet de réduire la distance verticale entre la raclette 16 et le bras d'entraînement, afin d'améliorer l'esthétique et le comportement aérodynamique du montage du balai 10 avec l'extrémité du bras d'entraînement.

Conformément à un premier aspect de la face d'appui 54, celle-ci porte, au moins en partie, les moyens de montage du connecteur 30 sur le support de montage 28.

On a représenté à la figure 3 un premier mode de montage du connecteur 30 sur le support 28 par emboîtement élastique.

Ici, le connecteur 30 comporte deux lames verticales inférieures 56 qui prolongent verticalement vers le bas les joues 50. Les deux lames 56 sont aptes à se déformer élastiquement lors du montage du connecteur 30 sur le support de montage 28, et elles coopèrent avec les faces longitudinales verticales externes 32e des parties latérales 32 pour réaliser le montage du connecteur 30 sur le support de montage 28.

Selon un deuxième mode de réalisation représenté à la figure 4, le connecteur 30 est monté sur le support 32 par sertissage. Ici, le sertissage est obtenu, par déformation plastique de deux bandes latérales 58 du support 28 sur des nervures externes 60 du connecteur 30.

Chaque bande latérale 58 s'étend ici globalement transversalement vers l'extérieur depuis la face externe 32e d'une partie latérale 32 du support de montage 28. de plus, pour permettre la déformation plastique des bandes latérales, les parties latérales 32 sont réalisées en un matériau léger et déformable plastiquement, par exemple en alliage d'aluminium et de zinc communément appelé "Zamak".

On a représenté à la figure 5 un autre mode de réalisation des moyens de montage du connecteur 30 sur le support de montage 28 selon lequel le support porte un organe de montage 62 qui est apte à être emboîté dans un logement associé (non représenté) du connecteur 30.

L'organe de montage 62 consiste globalement en un élément plan qui s'étend longitudinalement vers l'arrière, dont l'extrémité longitudinale avant 62a est fixée au support de montage 28, et dont l'extrémité arrière 62b est conformée pour être emboîtée dans le logement associé du connecteur 30.

Ici, l'extrémité arrière 62b de l'organe de montage 62 comporte deux crochets longitudinaux 64 qui sont aptes à se déformer élastiquement lors de l'introduction de l'organe de montage 62 dans le connecteur 30, puis à reprendre leur forme initiale lorsque le connecteur est dans sa position montée sur le support de montage 28, pour réaliser la solidarisation du connecteur 30 avec le support de montage 28.

Selon le mode de réalisation représenté à la figure 5, l'organe de montage 62 est porté par les moyens arrière de solidarisation 40.

A cet effet, les moyens arrière de solidarisation 40 sont conformés de manière que les bossages 46 soient distants l'un de l'autre, de manière similaire aux moyens avant de solidarisation 38 représentés à la figure 1.

L'extrémité longitudinale arrière 62b de l'organe de montage 62 est reçue entre les deux bossages 46, et elle est traversée par le tronçon central de la tige transversale 48 des moyens arrière de solidarisation 40.

Enfin, une face inférieure de l'organe de montage 62 est en appui contre la face supérieure 54 du support de montage 28 pour bloquer l'organe de montage 62 en rotation autour de la tige transversale 48.

Pour réaliser le blocage du connecteur 30 en position montée sur le support de montage 28, les moyens avant de solidarisation 38 comportent une rainure transversale 66 qui est ouverte vers l'arrière et qui est apte à recevoir une partie complémentaire du connecteur, à la manière d'un assemblage tenon-mortaise.

Pour cela, les bossages 42 des moyens avant de solidarisation 38 comportent une face arrière 42a transversale verticale dans laquelle la rainure 66 formant mortaise est réalisée.

La partie complémentaire du connecteur 30 formant tenon est alors introduite dans la rainure 66 selon un mouvement longitudinal vers l'avant, simultanément à l'introduction de l'organe de montage 62 dans le logement associé du connecteur 30.

Enfin, pour bloquer transversalement le connecteur 30 en position montée sur le support de montage 28, chaque partie latérale 32 comporte une paroi longitudinale verticale 68 qui s'étend verticalement vers le haut depuis le bord longitudinal d'extrémité transversale associé de la face supérieure 54 du support de montage 28.

Lorsque le connecteur 30 est monté sur le support de montage 28, la partie du connecteur 30 qui est en appui sur la face supérieure 54 du support de montage 28 est reçue entre les deux parois 68, le bloquant ainsi transversalement.

Le support de montage 28 conforme à l'invention, a été décrit comme étant monté sur un balai d'essuie-glace comportant une monture de support 12. Cependant, il sera compris que l'invention n'est pas limitée à ce seul type de balai, et que le support de montage peut être fixé à un balai d'essuie-glace ayant une autre structure, par exemple, comme décrit dans le document JP-A-2003146190 précité, pour lequel le balai d'essuie-glace est constitué d'une raclette d'essuie-glace d'orientation principale longitudinale et de deux vertèbres latérales longitudinales agencées de part et d'autre de la raclette.

## Revendications

1. Support de montage (28) d'un balai (10) d'essuie-glace d'orientation principale longitudinale sur un bras d'entraînement du balai (10), qui est fixé sur le balai (10), et sur lequel le bras d'entraînement est monté par l'intermédiaire d'un connecteur (30) de montage (28) et d'articulation,
qui comporte deux parties latérales (32) d'orientation principale longitudinale agencées transversalement de part et d'autre du balai (10), chaque partie latérale (32) comportant une embase (34) supérieure qui est en appui sur une face supérieure (18s) du balai (10), une patte latérale (36) inférieure s'étendant verticalement vers le bas depuis l'embase supérieure (34) associée et portant des moyens de blocage du support (28) en position sur le balai (10),
l'extrémité longitudinale avant du support de montage (28) portant des moyens avant de solidarisation (38) des parties latérales (32) l'une avec l'autre, et l'extrémité longitudinale arrière du support de montage (28) portant des moyens arrière de solidarisation (40) des parties latérales (32) l'une avec l'autre, de manière que le support de montage (28) soit fixé sur l'élément de structure du balai (10) lorsque les deux parties latérales (32) sont solidarisées l'une avec l'autre.
et qui comporte des moyens de montage du connecteur (30) sur le support de montage (28),
les moyens avant de solidarisation (38) et les moyens arrière de solidarisation (40) étant distincts des moyens de montage du connecteur (30) sur le support de montage (28), de manière que les deux parties latérales (32) soient solidarisées l'une avec l'autre indépendamment du montage du connecteur (30) sur le support de montage (28),
le connecteur (30) étant monté au moins en partie sur le support de montage (28) au niveau d'une face horizontale supérieure d'appui (54) du support de montage (28) qui est réalisée en partie dans chaque partie latérale (32) et qui est agencée longitudinalement entre les moyens avant de solidatisation (38) et les moyens arrière de solidarisation (40) et **caractérisé en ce que** les moyens de montage du connecteur (30) sont portés au moins en partie par la face supérieure d'appui (54).

2. Support de montage (28) selon la revendication 1, **caractérisé en ce que** la face supérieure d'appui (54) est située verticalement à une hauteur inférieure à la hauteur des moyens avant de solidarisation (38) et des moyens arrière de solidarisation (40).

3. Support de montage (28) selon la revendication 1 ou 2, **caractérisé en ce que** le connecteur (30) est monté sur la face supérieure d'appui (54) du support de montage (28) par emboîtement élastique de formes complémentaires.

4. Support de montage (28) selon la revendication 1 ou 2, **caractérisé en ce que** le connecteur (30) est monté sur la face supérieure d'appui (54) du support de montage (28) par sertissage sur la face supérieure d'appui (54).

5. Support de montage (28) selon l'une quelconque des revendications précédentes, **caractérisé en ce que** les moyens de montage du connecteur (30) sont portés au moins en partie par les moyens avant de solidarisation (38) et/ou les moyens arrière de solidarisation (40).

6. Support de montage (28) selon la revendication précédente, **caractérisé en ce que** les moyens de montage du connecteur (30) comportent un organe de montage (62) qui est porté par les moyens arrière de solidarisation (40).

7. Support de montage (28) selon la revendication 5 ou 6, **caractérisé en ce que** les moyens avant de solidarisation (38) comportent une paroi (42a) globalement transversale verticale dans laquelle est réalisée une rainure transversale (66) formant mortaise qui est apte à recevoir une partie complémentaire du connecteur (30) formant tenon.

8. Support de montage (28) selon l'une quelconque des revendications précédentes, **caractérisé en ce que** les moyens avant de solidarisation (38) et/ou les moyens arrière de solidarisation (40) comportent un bossage (42, 46) agencé à l'extrémité longitudinale avant ou arrière, respectivement, de l'embase (34) supérieure de chaque partie latérale (32), et comportent une tige transversale (44, 48) dont chaque extrémité transversale de la tige (44, 48) est sortie dans le bossage (42, 46) associé de chacune des deux parties latérales (32).

9. Support de montage (28) selon la revendication précédente, **caractérisé en ce que** la dimension transversale de chaque bossage (42, 46) est globalement identique à la dimension transversale de l'embase (34) de la partie latérale (32) associée.

10. Support de montage (28) selon la revendication 8 **caractérisé en ce que** la dimension transversale de chaque bossage (42, 46) est inférieure à la dimension transversale de l'embase (34) de la partie latérale (32) associée.

## Claims

1. Support (28) for mounting a windshield wiper blade (10) of longitudinal main orientation on a driving arm of the blade (10), which is fixed to the blade (10), and on which the driving arm is mounted via a mounting (28) and articulation connector (30),
which includes two lateral parts (32) of longitudinal main orientation arranged transversely on either side of the blade (10), each lateral part (32) including an upper base (34) that bears on an upper face (18s) of the blade (10), a lower lateral lug (36) extending vertically downward from the associated upper base (34) and carrying means for locking the support (28) in position on the blade (10),
the front longitudinal extremity of the mounting support (28) carrying front means (38) for fastening the lateral parts (32) to each other and the rear longitudinal extremity of the mounting support (28) carrying rear means (40) for fastening the lateral parts (32) to each other, so that the mounting support (28) is fixed to the structural element of the blade (10) when the two lateral parts (32) are fastened to each other,
and which includes means for mounting the connector (30) on the mounting support (28),
the front fastening means (38) and the rear fastening means (40) being distinct from the means for mounting the connector (30) on the mounting support (28), so that the two lateral parts (32) are fastened to each other independently of the mounting of the connector (30) on the mounting support (28), the connector (30) being mounted at least in part on the mounting support (28) at the level of a horizontal upper bearing face (54) of the mounting support (28) that is produced in part in each lateral part (32) and which is arranged longitudinally between the front fastening means (38) and the rear fastening means (40) and **characterized in that** the mounting means of the connector (30) are carried at least in part by the upper bearing face (54).

2. Mounting support (28) according to Claim 1 **characterized in that** the upper bearing face (54) is situated vertically at a height less than the height of the front fastening means (38) and the rear fastening means (40).

3. Mounting support (28) according to Claim 1 or 2 **characterized in that** the connector (30) is mounted on the upper bearing face (54) of the mounting support (28) by elastic nesting of complementary shapes.

4. Mounting support (28) according to Claim 1 or 2 **characterized in that** the connector (30) is mounted on the upper bearing face (54) of the mounting support (28) by crimping it to the upper bearing face (54).

5. Mounting support (28) according to any one of the preceding claims, **characterized in that** the mounting means of the connector (30) are carried at least in part by the front fastening means (38) and/or the rear fastening means (40).

6. Mounting support (28) according to the preceding claim, **characterized in that** the mounting means of the connector (30) include a mounting member (62) that is carried by the rear fastening means (40).

7. Mounting support (28) according to Claim 5 or 6 **characterized in that** the front fastening means (38) include a globally transverse vertical wall (42a) in which is produced a transverse groove (66) forming a mortise that is adapted to receive a complementary part of the connector (30) forming a tenon.

8. Mounting support (28) according to any one of the preceding claims, **characterized in that** the front fastening means (38) and/or the rear fastening means (40) include a boss (42, 46) arranged at the front or rear longitudinal extremity, respectively, of the upper base (34) of each lateral part (32) and include a transverse rod (44, 48) where each transverse extremity of the rod (44, 48) is crimped into the associated boss (42, 46) of each of the two lateral parts (32).

9. Mounting support (28) according to the preceding claim, **characterized in that** the transverse dimension of each boss (42, 46) is globally identical to the transverse dimension of the base (34) of the associated lateral part (32).

10. Mounting support (28) according to Claim 8, **characterized in that** the transverse dimension of each boss (42, 46) is less than the transverse dimension of the base (34) of the associated lateral part (32).

## Patentansprüche

1. Einbauhalter (28) eines Scheibenwischers (10) mit hauptsächlicher Längsausrichtung auf einem Antriebsarm des Wischers (10), der am Wischer (10) befestigt ist und auf dem der Antriebsarm mittels eines Einbau- (28) und Gelenkverbinders (30) eingebaut wird,
der zwei Seitenbereiche (32) mit hauptsächlicher Längsausrichtung aufweist, die quer zu beiden Seiten des Wischers (10) angeordnet sind, wobei jeder Seitenbereich (32) eine obere Grundplatte (34) aufweist, die auf einer Oberseite (18s) des Wischers (10) aufliegt, wobei eine untere seitliche Lasche (36) sich ausgehend von der zugeordneten oberen Grundplatte (34) senkrecht nach unten erstreckt und Blockiereinrichtungen des Halters (28) in Stellung auf dem Wischer (10) trägt,
wobei das vordere Längsende des Einbauhalters (28) vordere Einrichtungen (38) zur festen Verbindung der Seitenbereiche (32) miteinander trägt, und das hintere Längsende des Einbauhalters (28) hintere Einrichtungen (40) zur festen Verbindung der Seitenbereiche (32) miteinander trägt, so dass der Einbauhalter (28) auf dem Strukturelement des Wischers (10) befestigt ist, wenn die zwei Seitenbereiche (32) fest miteinander verbunden sind,
und der Einrichtungen zum Einbau des Verbinders (30) auf dem Einbauhalter (28) aufweist,
wobei die vorderen Einrichtungen zur festen Verbindung (38) und die hinteren Einrichtungen zur festen Verbindung (40) sich von den Einbaueinrichtungen des Verbinders (30) auf dem Einbauhalter (28) unterscheiden, so dass die zwei Seitenbereiche (32) unabhängig von dem Einbau des Verbinders (30) auf dem Einbauhalter (28) fest miteinander verbunden sind, wobei der Verbinder (30) zumindest zum Teil im Bereich einer oberen waagrechten Auflageseite (54) des Einbauhalters (28) auf dem Einbauhalter (28) eingebaut wird, die zum Teil in jedem Seitenbereich (32) hergestellt und in Längsrichtung zwischen den vorderen Einrichtungen zur festen Verbindung (38) und den hinteren Einrichtungen zur festen Verbindung (40) angeordnet ist, und **dadurch gekennzeichnet, dass** die Einbaueinrichtungen des Verbinders (30) zumindest zum Teil von der oberen Auflageseite (54) getragen werden.

2. Einbauhalter (28) nach Anspruch 1, **dadurch gekennzeichnet, dass** die obere Auflageseite (54) sich senkrecht auf einer geringeren Höhe als die Höhe der vorderen Einrichtungen zur festen Verbindung (38) und der hinteren Einrichtungen zur festen Verbindung (40) befindet.

3. Einbauhalter (28) nach Anspruch 1 oder 2, **dadurch gekennzeichnet, dass** der Verbinder (30) durch elastisches Ineinanderfügen komplementärer Formen auf die obere Auflageseite (54) des Einbauhalters (28) eingebaut wird.

4. Einbauhalter (28) nach Anspruch 1 oder 2, **dadurch gekennzeichnet, dass** der Verbinder (30) durch Einspannen auf die obere Auflageseite (54) auf die obere Auflageseite (54) des Einbauhalters (28) eingebaut wird.

5. Einbauhalter (28) nach einem der vorhergehenden Ansprüche, **dadurch gekennzeichnet, dass** die Einbaueinrichtungen des Verbinders (30) zumindest zum Teil von den vorderen Einrichtungen zur festen Verbindung (38) und/oder von den hinteren Einrichtungen zur festen Verbindung (40) getragen werden.

6. Einbauhalter (28) nach dem vorhergehenden Anspruch, **dadurch gekennzeichnet, dass** die Einbaueinrichtungen des Verbinders (30) ein Einbauorgan (62) aufweisen, das von den hinteren Einrichtungen zur festen Verbindung (40) getragen wird.

7. Einbauhalter (28) nach Anspruch 5 oder 6, **dadurch gekennzeichnet, dass** die vorderen Einrichtungen zur festen Verbindung (38) eine senkrechte global quer verlaufende Wand (42a) aufweisen, in der eine eine Nut formende Querrille (66) hergestellt wird, die einen komplementären Bereich des Verbinders (30) aufnehmen kann, der eine Feder bildet.

8. Einbauhalter (28) nach einem der vorhergehenden Ansprüche, **dadurch gekennzeichnet, dass** die vorderen Einrichtungen zur festen Verbindung (38) und/oder die hinteren Einrichtungen zur festen Verbindung (40) eine Wölbung (42, 46) aufweisen, die am vorderen bzw. hinteren Längsende der oberen Grundplatte (34) jedes Seitenbereichs (32) angeordnet ist, und eine Querstange (44, 48) aufweisen, wobei jedes Querende der Stange (44, 48) in die zugeordnete Wölbung (42, 46) jedes der zwei Seitenbereiche (32) eingespannt ist.

9. Einbauhalter (28) nach dem vorhergehenden Anspruch, **dadurch gekennzeichnet, dass** die Querabmessung jeder Wölbung (42, 46) global gleich der Querabmessung der Grundplatte (34) des zugeordneten Seitenbereichs (32) ist.

10. Einbauhalter (28) nach Anspruch 8, **dadurch gekennzeichnet, dass** die Querabmessung jeder Wölbung (42, 46) geringer als die Querabmessung der Grundplatte (34) des zugeordneten Seitenbereichs (32) ist.
